(19) **Europäisches Patentamt / European Patent Office / Office européen des brevets**

(11) **EP 3 760 688 B1**

(12) **EUROPEAN PATENT SPECIFICATION**

(45) Date of publication and mention
of the grant of the patent:
**15.01.2025 Bulletin 2025/03**

(21) Application number: **19761393.8**

(22) Date of filing: **14.02.2019**

(51) International Patent Classification (IPC):
*C09J 175/04* (2006.01)    *B32B 27/40* (2006.01)
*B32B 37/12* (2006.01)    *B65D 65/40* (2006.01)
*C08G 18/10* (2006.01)    *C08G 18/16* (2006.01)
*C08G 18/36* (2006.01)    *C08G 18/38* (2006.01)
*C08G 18/42* (2006.01)    *C08G 18/48* (2006.01)
*C09J 5/04* (2006.01)    *C09J 11/06* (2006.01)
*C08G 18/22* (2006.01)    *C08G 18/24* (2006.01)
*C08G 18/50* (2006.01)    *C08G 18/76* (2006.01)
*B32B 7/12* (2006.01)    *B32B 15/082* (2006.01)
*B32B 15/085* (2006.01)    *B32B 15/088* (2006.01)

(52) Cooperative Patent Classification (CPC):
(C-Sets available)
**C08G 18/246; B32B 7/12; B32B 15/082;**
**B32B 15/085; B32B 15/088; B32B 15/09;**
**B32B 15/12; B32B 15/18; B32B 15/20;**
**B32B 27/08; B32B 27/10; B32B 27/281;**
**B32B 27/285; B32B 27/286; B32B 27/302;** (Cont.)

(86) International application number:
**PCT/JP2019/005249**

(87) International publication number:
**WO 2019/167638 (06.09.2019 Gazette 2019/36)**

(54) **METHOD FOR PRODUCING FLEXIBLE-PACKAGING FILM**

HERSTELLUNGSVERFAHREN FÜR FLEXIBLE VERPACKUNGSFOLIE

PROCÉDÉ DE PRODUCTION DE FILM D'EMBALLAGE SOUPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.02.2018 JP 2018033324**

(43) Date of publication of application:
**06.01.2021 Bulletin 2021/01**

(73) Proprietor: **DIC Corporation**
**Tokyo 174-8520 (JP)**

(72) Inventors:
• **HATA Kiyomi**
**Tokyo 174-8520 (JP)**

• **TAKAHASHI Shigekazu**
**Tokyo 174-8520 (JP)**

(74) Representative: **Kraus & Lederer PartGmbB**
**Thomas-Wimmer-Ring 15**
**80539 München (DE)**

(56) References cited:
WO-A1-2015/046453    WO-A1-2016/152370
JP-A- 2003 171 643    JP-A- 2004 155 113
JP-A- 2012 502 166    JP-A- 2014 189 639
JP-A- 2014 189 639    JP-A- 2016 074 780
JP-A- H04 202 588

**(Cont. next page)**

(52) Cooperative Patent Classification (CPC): (Cont.)
**B32B 27/304; B32B 27/306; B32B 27/308;
B32B 27/32; B32B 27/34; B32B 27/36;
B32B 27/365; B32B 37/12; C08G 18/10;
C08G 18/168; C08G 18/227; C08G 18/4825;
C08G 18/4829; C08G 18/5024; C08G 18/7671;
C09J 5/04; C09J 175/04;** B32B 2250/02;
B32B 2255/10; B32B 2255/205; B32B 2255/26;
B32B 2307/518; B32B 2553/00; C09J 2301/204;
C09J 2475/00

C-Sets
**C08G 18/10, C08G 18/36;
C08G 18/10, C08G 18/48;
C08G 18/10, C08G 18/50;
C08G 18/10, C08G 18/725;
C08G 18/10, C08G 18/7664;
C08G 18/10, C08G 18/792;
C09J 175/04, C08K 5/103**

**Description**

Technical Field

The present invention relates to a method for producing a flexible-packaging film, in particular, to a production method including a step of separately applying a catalyst.

Background Art

As adhesives for flexible-packaging films, reactive adhesives such as two-component curable polyurethane resin adhesives have been widely used.

Such a plastic film is subjected to back printing, and the ink-applied surface is coated with such an adhesive and bonded to another plastic film. Thus, the ink hinders providing a good appearance, and there has been a demand for an improvement in appearance.

Furthermore, regarding a flexible-packaging material employing a plastic laminate, there is a preference for hard texture. An adhesive coating film that is hard provides good texture, so that there has been a demand for such products.

On the other hand, from the viewpoint of improving the production efficiency of the flexible-packaging films, there are desirable properties. For example, an improved fast curing property and an improved initial tack property, which achieve reduction in the tunneling phenomenon or enable a trilayer laminate, are desirable properties for the two-component curable polyurethane resin adhesives.

In general, in the case of applying such a two-component curable polyurethane resin adhesive to a film substrate for flexible packaging, a method commonly employed is preparing, in advance, a premix so as to contain components other than a polyisocyanate compound, mixing this and the polyisocyanate compound together, and applying the resultant adhesive composition to the substrate (for example, refer to Paragraph 0029 of Patent Literature 1). However, this method is disadvantageous in that the highly reactive isocyanate component leads to a very short pot life. This results in limitations on designing of an adhesive having an improved fast curing property and an improved initial tack property.

(Separate application and problem)

In order to address such a problem, a processing method has been proposed in which a polyisocyanate compound and a polyol compound are individually applied to different substrates, and they are bonded together. However, when the substrates individually coated with the compounds are bonded together, a compound having a lower viscosity may be squeezed out, which may result in curing defects at edge portions of the product, which may result in degradation of production stability. Thus, the method has not yet been put into practical use for flexible-packaging materials.

(Application amount ratio of agent A to agent B)

In the case of the processing method of performing separate application and lamination, the polyisocyanate compound and the polyol compound are individually applied in application amounts corresponding to a predetermined mixing ratio; application amounts after bonding together in flexible-packaging applications are, in general, 1.0-3.0 $g/m^2$, and often 1.2-2.0 $g/m^2$. On the other hand, coaters used in the industry require application amounts of 0.6 $g/m^2$ or more in order to perform stable application; in order to perform application with stability, an application amount ratio of the polyisocyanate compound to the polyol compound needs to be set at or close to 1/1. However, this leads to the above-described squeeze-out phenomenon.

Among further prior art, JP 2004-155113 A discloses application of catalyst solution in dot shape in fibre coating.

Citation List

Patent Literature

PTL 1: JP 2014-189639 A
PTL 2: JP 2003-171641 A
PTL 3: JP 2003-171642 A
PTL 4: JP 2003-171643 A

3

## Summary of Invention

### Technical Problem

An object of the present invention is to provide a method for producing a flexible-packaging film in which a catalyst alone is separately applied, to thereby suppress the squeeze-out phenomenon during the application, to increase the pot life of the adhesive for enabling an improvement in the production efficiency, and to provide a fast curing speed.

### Solution to Problem

The inventors of the present invention have found that the above-described problem is addressed by a method for producing a flexible-packaging film in which a first substrate and a second substrate are laminated with a reactive adhesive of a polyisocyanate composition (X) and a polyol composition (Y) therebetween, the method including a two-component separate application step in which a liquid mixture applied to the first substrate and including the polyisocyanate composition (X) and the polyol composition (Y), and a catalyst (Z) formed in a dot pattern on the second substrate are brought into contact with each other to achieve contact-bonding together.

Thus, the present invention provides a method for producing a flexible-packaging film in which a first substrate and a second substrate are laminated with a reactive adhesive of a polyisocyanate composition (X) and a polyol composition (Y) therebetween, the method including a two-component separate application step in which a liquid mixture applied to the first substrate and including the polyisocyanate composition (X) and the polyol composition (Y), and a catalyst (Z) that accelerates the urethane forming reaction and is formed in a dot pattern on the second substrate are brought into contact with each other to achieve contact-bonding together.

### Advantageous Effects of Invention

The present invention provides a method for producing a flexible-packaging film in which the catalyst (Z) is separately applied so as to be formed in a dot pattern, to thereby suppress the squeeze-out phenomenon during the application, to increase the pot life of the adhesive for improving the production efficiency, and to provide a fast curing speed.

### Description of Embodiments

(Reactive adhesive of polyisocyanate composition (X) and polyol composition (Y))

A reactive adhesive used in the present invention is a two-component reactive adhesive of a polyisocyanate composition (X) and a polyol composition (Y), the adhesive being also generally referred to as a two-component curable polyurethane resin adhesive. In the present invention, a catalyst (Z) is used during the two-component separate application step to thereby further accelerate the reaction of the two-component reactive adhesive.

(Polyisocyanate composition (X))

The polyisocyanate composition (X) used in the present invention is a composition that contains, as a main component, a polyisocyanate compound. As the polyisocyanate compound used in the present invention, a publicly known polyisocyanate compound can be used without particular limitations, and such polyisocyanate compounds can be used alone or in combination of two or more thereof.

Examples include polyisocyanates having an aromatic structure in the molecular structure such as tolylene diisocyanate, diphenylmethane diisocyanate, polymeric diphenylmethane diisocyanate, 1,5-naphthalene diisocyanate, triphenylmethane triisocyanate, and xylylene diisocyanate, and compounds in which NCO groups of these polyisocyanates are partially modified with carbodiimide; allophanate compounds derived from these polyisocyanates; polyisocyanates having an alicyclic structure in the molecular structure such as isophorone diisocyanate, 4,4'-methylenebis(cyclohexylisocyanate), and 1,3-(isocyanatomethyl)cyclohexane; linear aliphatic polyisocyanates such as 1,6-hexamethylene diisocyanate, lysine diisocyanate, and trimethylhexamethylene diisocyanate, and allophanate compounds of these; isocyanurates of these polyisocyanates; allophanates derived from these polyisocyanates; biurets derived from these polyisocyanates; trimethylolpropane-modified adducts; and polyisocyanates that are reaction products of the above-described various polyisocyanates and polyol components.

Together with a polyisocyanate having an aromatic structure in the molecular structure, a linear aliphatic polyisocyanate is preferably made to react with a polyol compound because flexibility is imparted to the laminate to improve flex durability. In this case, the linear aliphatic polyisocyanate, during a reaction with hydroxyl groups in the polyol compound, forms urethane bonds or allophanate bonds to thereby be introduced into the polyisocyanate compound. In the case of using the polyisocyanate having an aromatic structure and the linear aliphatic polyisocyanate in combination, the usage ratio of these based on mass is preferably [polyisocyanate having aromatic structure/linear aliphatic polyisocyanate] of 99/1 to 70/30 from the viewpoint of lowering the viscosity.

In this case, the reaction ratio of the polyisocyanate compound to the polyol compound is preferably set such that the equivalent ratio of isocyanate groups to hydroxyl groups [isocyanate group/hydroxyl group] is in a range of 1.0 to 5.0 from the viewpoint of the balance between the cohesion strength and flexibility of the adhesive coating film.

Specific examples of the polyol compound that is caused to react with the polyisocyanate having, in the molecular structure, an alicyclic structure or an aromatic structure include chain aliphatic glycols such as ethylene glycol, propylene glycol, 1,3-propanediol, 1,4-butanediol, 1,5-pentanediol, 3-methyl-1,5-pentanediol, 1,6-hexanediol, neopentyl glycol, methylpentanediol, dimethylbutanediol, butylethylpropanediol, diethylene glycol, triethylene glycol, tetraethylene glycol, dipropylene glycol, tripropylene glycol, and bis(hydroxyethoxy)benzene; alicyclic glycols such as 1,4-cyclohexanediol and 1,4-cyclohexanedimethanol; trifunctional or tetrafunctional aliphatic alcohols such as glycerol, trimethylolpropane, and pentaerythritol;

bisphenols such as bisphenol A, bisphenol F, hydrogenated bisphenol A, and hydrogenated bisphenol F; dimer diols; polyether polyols provided by addition polymerization of an alkylene oxide such as ethylene oxide, propylene oxide, butylene oxide, styrene oxide, epichlorohydrin, tetrahydrofuran, or cyclohexylene in the presence of a polymerization initiator such as the glycol or trifunctional or tetrafunctional aliphatic alcohol; a polyester polyol (1) that is a reaction product of a polyester provided by a ring-opening polymerization reaction of a cyclic ester compound such as propiolactone, butyrolactone, ε-caprolactone, σ-valerolactone, or β-methyl-σ-valerolactone, and the glycol or trifunctional or tetrafunctional aliphatic alcohol; a polyester polyol (2) provided by a reaction of a polyol such as the chain aliphatic glycol, alicyclic glycol, dimer diol, bisphenol, or the polyether polyol, and a polycarboxylic acid; a polyester polyol (3) provided by a reaction of the trifunctional or tetrafunctional aliphatic alcohol, and a polycarboxylic acid; a polyester polyol (4) provided by a reaction of a bifunctional polyol, the trifunctional or tetrafunctional aliphatic alcohol, and a polycarboxylic acid; a polyester polyol (5) that is a polymer of a hydroxyl acid such as dimethylolpropionic acid or castor oil fatty acid; a mixture of the polyester polyol (1), (2), (3), (4), or (5) and polyether polyol; and castor oil-based polyols such as castor oil, dehydrated castor oil, hardened castor oil that is hydrogenated castor oil, and 5 to 50 mol alkylene oxide adduct of castor oil.

Examples of the polycarboxylic acid used for producing the polyester polyol (2), (3), or (4) include acyclic aliphatic dicarboxylic acids such as succinic acid, adipic acid, azelaic acid, sebacic acid, dodecanedicarboxylic acid, maleic anhydride, and fumaric acid; alicyclic dicarboxylic acids such as 1,3-cyclopentanedicarboxylic acid and 1,4-cyclohexanedicarboxylic acid; aromatic dicarboxylic acids such as terephthalic acid, isophthalic acid, phthalic acid, 1,4-naphthalenedicarboxylic acid, 2,5-naphthalenedicarboxylic acid, 2,6-naphthalenedicarboxylic acid, naphthalic acid, biphenyldicarboxylic acid, and 1,2-bis(phenoxy)ethane-p,p'-dicarboxylic acid; anhydrides or ester-forming derivatives of these aliphatic or aromatic dicarboxylic acids; and polybasic acids such as p-hydroxybenzoic acid, p-(2-hydroxyethoxy)benzoic acid, ester-forming derivatives of these dihydroxy carboxylic acids, and dimer acids.

In particular, the polyisocyanate compound obtained by a reaction of the polyether polyol and the polyisocyanate compound is preferred from the viewpoint of wettability for substrates.

The polyisocyanate compound preferably has a weight-average molecular weight (Mw) in a range of 3,000 to 10,000 from the viewpoint of reducing the aging time and ensuring appropriate flex durability, and preferably has an isocyanate content of 5 to 20 mass% determined by a titration method (using di-n-butylamine) from the viewpoint of having an appropriate resin viscosity and providing high coatability.

(Polyol composition (Y))

The polyol composition (Y) used in the present invention is a composition that contains, as a main component, a polyol compound. Such polyol compounds may be used alone or in combination of two or more thereof.

Specific examples include glycols such as ethylene glycol, propylene glycol, 1,3-propanediol, 1,4-butanediol, 1,5-pentanediol, 3-methyl-1,5-pentanediol, 1,6-hexanediol, neopentyl glycol, methylpentanediol, dimethylbutanediol, butylethylpropanediol, diethylene glycol, triethylene glycol, tetraethylene glycol, dipropylene glycol, tripropylene glycol, bis(hydroxyethoxy)benzene, 1,4-cyclohexanediol, 1,4-cyclohexanedimethanol, and triethylene glycol; trifunctional or tetrafunctional aliphatic alcohols such as glycerol, trimethylolpropane, and pentaerythritol; bisphenols such as bisphenol A, bisphenol F, hydrogenated bisphenol A, and hydrogenated bisphenol F; and dimer diols;

polyether polyols provided by addition polymerization of an alkylene oxide such as ethylene oxide, propylene oxide, butylene oxide, styrene oxide, epichlorohydrin, tetrahydrofuran, or cyclohexylene in the presence of a polymerization initiator such as the glycol or trifunctional or tetrafunctional aliphatic alcohol; polyether urethane polyols provided by making the polyether polyols have higher molecular weights by using the aromatic or aliphatic polyisocyanates; a polyester polyol (1) that is a reaction product of a polyester provided by a ring-opening polymerization reaction of a cyclic ester compound such as propiolactone, butyrolactone, ε-caprolactone, σ-valerolactone, or β-methyl-σ-valerolactone and a polyhydric alcohol such as the glycol, glycerol, trimethylolpropane, or pentaerythritol; a polyester polyol (2) provided by causing a reaction of a bifunctional polyol such as the glycol, dimer diol, or the bisphenol, and a polycarboxylic acid; a polyester polyol (3) provided by causing a reaction of the trifunctional or tetrafunctional aliphatic alcohol and a polycarboxylic acid; a polyester polyol (4) provided by causing a reaction of a bifunctional polyol, the trifunctional or tetrafunctional aliphatic alcohol, and a polycarboxylic acid; a polyester polyol (5) that is a polymer of a hydroxyl acid such as dimethylolpropionic acid or castor oil fatty acid; polyester polyether polyols provided by reactions of the polyester polyols (1) to (5), the polyether polyol, and an aromatic or aliphatic polyisocyanate; polyester polyurethane polyols provided by making the polyester polyols (1) to (5) have higher molecular weights by using an aromatic or aliphatic polyisocyanate; mixtures of the polyester polyols (1) to (5) and polyether polyol; and castor oil-based polyols such as castor oil, dehydrated castor oil, hardened castor oil that is hydrogenated castor oil, and a 5 to 50 mol alkylene oxide adduct of castor oil. The polyol for use preferably has a weight-average molecular weight (Mw) of 400 to 5000.

Examples of the polycarboxylic acid include aliphatic dicarboxylic acids such as succinic acid, adipic acid, azelaic acid, sebacic acid, dodecanedicarboxylic acid, maleic anhydride, fumaric acid, 1,3-cyclopentanedicarboxylic acid, and 1,4-cyclohexanedicarboxylic acid; aromatic dicarboxylic acids such as terephthalic acid, isophthalic acid, 1,4-naphthalenedicarboxylic acid, 2,5-naphthalenedicarboxylic acid, 2,6-naphthalenedicarboxylic acid, naphthalic acid, biphenyldicarboxylic acid, and 1,2-bis(phenoxy)ethane-p,p'-dicarboxylic acid; anhydrides or ester-forming derivatives of these aliphatic or dicarboxylic acids; and polybasic acids such as p-hydroxybenzoic acid, p-(2-hydroxyethoxy)benzoic acid, ester-forming derivatives of these dihydroxycarboxylic acids, and dimer acids.

The polyol composition (Y) may include, in addition to the polyol compound, a tertiary amine compound having a plurality of hydroxyl groups, to thereby achieve faster curing. The tertiary amine compound having a plurality of hydroxyl groups may be mixed with the polyol composition (Y) in advance, or may be used by being mixed with the polyol composition (Y) immediately before application to the substrate.

The tertiary amine compound having a plurality of hydroxyl groups needs to have two or more hydroxyl groups, preferably has 2 to 6 hydroxyl groups. It has at least one tertiary amino group, preferably has 1 to 2 tertiary amino groups.

Specific examples include polypropylene glycol ethylenediamine ether, tri(1,2-polypropylene glycol)amine, N-ethyldiethanolamine, N-methyl-N-hydroxyethyl-N-hydroxyethoxyethylamine, pentakis(hydroxypropyl)diethylenetriamine, and tetrakis(hydroxypropyl)ethylenediamine.

The tertiary amine compound having a plurality of hydroxyl groups may be a commercially available product. Examples of the commercially available product include ED-500 and TE-360 manufactured by KUKDO Chemical (Kunshan) Co., Ltd.

In the present invention, the reason why, for the polyol composition (Y), the use of the combination of the polyol compound and the tertiary amine compound having a plurality of hydroxyl groups provides accelerated curing has not been found. In general, such a tertiary amine having a plurality of hydroxyl groups can serve as a polyol having autocatalysis; it has a structure in which the tertiary amine and hydroxyl groups are positioned close to each other, so that catalysis is inferred to be more markedly exerted. This inferentially results in accelerated curing.

In the present invention, in the tertiary amine compound (B) having a plurality of hydroxyl groups, the hydroxyl groups are preferably secondary or tertiary. When they are secondary or tertiary, the pot life after mixing of the two components can be maintained, and, in addition, mixing in the layer of (X) and (Y) after contact-bonding is not inhibited in the step of separately applying the two components.

(Amine value)

In the reactive adhesive used in the present invention, the adhesive preferably has an amine value in a range of 0.5 to 40 mgKOH/g.

The amine value used herein means the number of milligrams of KOH equivalent to the amount of HCl required to neutralize 1 g of the sample, and can be calculated by a publicly known method without particular limitations. Specifically, for example, the following method is preferably employed.

Regarding the amine compound, when its chemical structure and, as needed, for example, its average molecular weight are known, the following mathematical formula can be used to achieve the calculation.

[Math. 1]

$$\text{Amine value (mgKOH/g)} = (\text{Number of amino groups per molecule/Average molecular weight}) \times 56.1 \times 1000$$

Alternatively, when the chemical structure, average molecular weight, and the like of the amine compound are not known, the measurement can be performed by a publicly known amine-value measurement method. The amine-value measurement method is, for example, a method of performing measurement in accordance with JIS-K7237-1995.

When the amine value satisfies the range, higher curability can be obtained while flex durability is ensured. In particular, the amine value is preferably in a range of 1.5 to 35 mgKOH/g, more preferably in a range of 1.5 to 25 mgKOH/g.

(Solvent)

The reactive adhesive used in the present invention is an adhesive that is cured by a chemical reaction between an isocyanate group and a hydroxyl group, and can be used as a solventless adhesive. Incidentally, "solvent" of the solventless adhesive in the present invention means organic solvents that have such high dissolving power that the polyisocyanate compound and the polyol compound used in the present invention can be dissolved therein; "solventless" means that these organic solvents having high dissolving power are not included. Specific examples of the organic solvents having high dissolving power include toluene, xylene, methylene chloride, tetrahydrofuran, methanol, ethanol, isopropyl alcohol, methyl acetate, ethyl acetate, n-butyl acetate, acetone, methyl ethyl ketone (MEK), cyclohexanone, toluol, xylol, n-hexane, and cyclohexane. Of these, toluene, xylene, methylene chloride, tetrahydrofuran, methyl acetate, and ethyl acetate are known as organic solvents that have particularly high dissolving power.

Alternatively, in the case of a demand for, for example, a low viscosity, the adhesive according to the present invention may be used after being appropriately diluted with such an organic solvent having high dissolving power in accordance with the desired viscosity. In this case, one or both of the polyisocyanate composition (X) and the polyol composition (Y) may be diluted. In this case, examples of the usable organic solvent include methanol, ethanol, isopropyl alcohol, methyl acetate, ethyl acetate, n-butyl acetate, acetone, methyl ethyl ketone (MEK), cyclohexanone, toluol, xylol, n-hexane, and cyclohexane. Of these, from the viewpoint of dissolving power, preferred are ethyl acetate and methyl ethyl ketone (MEK), particularly preferred is ethyl acetate. The organic solvent is used in an amount depending on the desired viscosity, but is often used in a range of about 20 to about 50 mass%.

In the reactive adhesive used in the present invention, the mixing ratio of the polyisocyanate composition (X) to the polyol composition (Y) is preferably set such that the equivalent ratio [isocyanate group/hydroxyl group] of the isocyanate groups in the polyisocyanate compound contained in the polyisocyanate composition (X) to the hydroxyl groups in the polyol compound contained in the polyol composition (Y) is in a range of 0.6 to 5.0 from the viewpoint of providing high bonding strength and high heat resistance during heat-sealing, particularly preferably in a range of 1.0 to 3.5 from the viewpoint of markedly providing these properties.

(Catalyst)

In the present invention, a catalyst is used, to thereby effectively suppress, in the laminate-packaged article, release of toxic low-molecular-weight chemical substances represented by aromatic amines, into the content.

The catalyst used in the present invention is not particularly limited as long as it accelerates the urethane-forming reaction; examples include catalysts such as metal-based catalysts, amine-based catalysts, diazabicycloundecene (DBU), aliphatic cyclic amide compounds, and titanium chelate complexes.

Examples of the metal-based catalysts include metal complex-based catalysts, inorganic metal-based catalysts, and organic metal-based catalysts. Specific examples of the metal complex-based catalysts include acetylacetonate salts of metals selected from the group consisting of Fe (iron), Mn (manganese), Cu (copper), Zr (zirconium), Th (thorium), Ti (titanium), Al (aluminum), and Co (cobalt), such as iron acetylacetonate, manganese acetylacetonate, copper acetylacetonate, and zirconia acetylacetonate. Of these, from the viewpoint of toxicity and catalytic activity, preferred are iron acetylacetonate ($Fe(acac)_3$) and manganese acetylacetonate ($Mn(acac)_2$).

Examples of the inorganic metal-based catalysts include catalysts selected from Fe, Mn, Cu, Zr, Th, Ti, Al, and Co.

Examples of the organic metal-based catalysts include stannous diacetate, stannous dioctoate, stannous dioleate, stannous dilaurate, dibutyl tin oxide, dibutyl tin diacetate, dibutyl tin dilaurate, dibutyl tin dichloride, dioctyl tin dilaurate, nickel octylate, nickel naphthenate, cobalt octylate, cobalt naphthenate, bismuth octylate, and bismuth naphthenate. Of these, preferred compounds are organotin catalysts, more preferred are stannous dioctoate and dibutyl tin dilaurate.

The tertiary amine catalyst is not particularly limited as long as it is a compound that has the above-described structure; examples include triethylenediamine, 2-methyltriethylenediamine, quinuclidine, and 2-methylquinuclidine. Of these, from the viewpoint of high catalytic activity and industrial availability, preferred are triethylenediamine and 2-methyltriethylenediamine.

Other examples of the tertiary amine catalyst include N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl) ethylenediamine, N,N,N',N",N"-pentamethyldipropylenetriamine, N,N,N',N'-tetramethylhexamethylenediamine, bis(2-dimethylaminoethyl) ether, dimethylethanolamine, dimethylisopropanolamine, dimethylaminoethoxyethanol, N,N-dimethyl-N'-(2-hydroxyethyl)ethylenediamine, N,N-dimethyl-N'-(2-hydroxyethyl)propanediamine, bis(dimethylaminopropyl)amine, bis(dimethylaminopropyl)isopropanolamine, 3-quinuclidinol, N,N,N',N'-tetramethylguanidine, 1,3,5-tris(N,N-dimethylaminopropyl)hexahydro-S-triazine, 1,8-diazabicyclo[5.4.0]undecene-7, N-methyl-N'-(2-dimethylaminoethyl)piperazine, N,N'-dimethylpiperazine, dimethylcyclohexylamine, N-methylmorpholine, N-ethylmorpholine, 1-methylimidazole, 1,2-dimethylimidazole, 1-isobutyl-2-methylimidazole, 1-dimethylaminopropylimidazole, N,N-dimethylhexanolamine, N-methyl-N'-(2-hydroxyethyl)piperazine, 1-(2-hydroxyethyl)imidazole, 1-(2-hydroxypropyl)imidazole, 1-(2-hydroxyethyl)-2-methylimidazole, and 1-(2-hydroxypropyl)-2-methylimidazole.

Examples of the aliphatic cyclic amide compounds include δ-valerolactam, ε-caprolactam, ω-enantholactam, η-capryllactam, and β-propiolactam. Of these, ε-caprolactam is more effective for accelerating curing.

The titanium chelate complexes are compounds whose catalytic activity is increased by irradiation with ultraviolet radiation, and are preferably titanium chelate complexes that have an aliphatic or aromatic diketone as a ligand from the viewpoint of providing a strong effect of accelerating curing. In addition, in the present invention, preferred is a compound having, as ligands, in addition to, an aromatic or aliphatic diketone, an alcohol having 2 to 10 carbon atoms from the viewpoint of providing advantages of the present invention more markedly.

In the present invention, such catalysts may be used alone or in combination thereof.

The ratio of the mass of the catalyst to the mass of the liquid mixture of the polyisocyanate composition (X) and the polyol composition (Y) being defined as 100 parts is preferably in a range of 0.001 to 80 parts, more preferably in a range of 0.01 to 70 parts.

The catalyst can be prepared as a solution or a dispersion and used in the application step; examples of a chelate-forming solvent include alcohols such as ethylene glycol, diethylene glycol, dipropylene glycol, propylene glycol, and butanediol, hydrocarbons such as mineral turpentine, β-diketones such as acetylacetone and fluorinated acetylacetone, and ketoesters such as methyl acetoacetate and ethyl acetoacetate; examples of a chelate-forming organic solvent include β-diketones such as acetylacetone and fluorinated acetylacetone, and ketoesters such as methyl acetoacetate and ethyl acetoacetate; examples of a plasticizer include phthalic acid esters such as dioctyl phthalate, diisononyl phthalate, isodecyl phthalate, and dibutyl phthalate, adipic acid esters such as dioctyl adipate and diisononyl adipate, and sebacic acid esters; and it can be turned into a solution or a dispersion by using, for example, a polyol such as polyethylene polyol or polypropylene polyol, or the polyol compound according to the present invention. The catalyst is desirably used after being mixed with polyol, isocyanate, and prepolymer. From the viewpoint of performing application by an ink jet method, the viscosity is preferably in a range of 5 mPa·s to 200 mPa·s, more preferably in a range of 5 mPa·s to 150 mPa·s, most preferably in a range of 5 mPa·s to 80 mPa·s. In order to satisfy such a range, dispersing is preferably performed in, for example, such an organic solvent in advance.

(Bonding accelerator)

The reactive adhesive used in the present invention may be used in combination with a bonding accelerator. Examples of the bonding accelerator include silane coupling agents, titanate-based coupling agents, coupling agents such as aluminum-based coupling agents, and epoxy resins.

Examples of the silane coupling agents include aminosilanes such as γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, and N-phenyl-γ-aminopropyltrimethoxysilane; epoxy silanes such as β-(3,4-epoxycyclohexyl)ethyltrimethoxysilane, γ-glycidoxypropyltrimethoxysilane, and γ-glycidoxypropyltriethoxysilane; vinylsilanes such as vinyltris(β-methoxyethoxy)silane, vinyltriethoxysilane, vinyltrimethoxysilane, and γ-methacryloxypropyltrimethoxysilane; hexamethyldisilazane, and γ-mercaptopropyltrimethoxysilane.

Examples of the titanate-based coupling agents include tetraisopropoxytitanium, tetra-n-butoxytitanium, butyl titanate dimer, tetrastearyl titanate, titanium acetylacetonate, titanium lactate, tetraoctylene glycol titanate, titanium lactate, and tetrastearoxy titanium.

Examples of the aluminum-based coupling agents include acetoalkoxy aluminum diisopropylate.

Examples of the epoxy resins include commercially available various epoxy resins of, for example, an epi-bis type, a novolac type, a β-methylepichloro type, a cyclic oxirane type, a glycidyl ether type, a glycidyl ester type, a polyglycol ether type, a glycol ether type, an epoxidized fatty acid ester type, a polycarboxylic acid ester type, an aminoglycidyl type, and a resorcin type; and compounds such as triglycidyltris(2-hydroxyethyl) isocyanurate, neopentyl glycol diglycidyl ether, 1,6-hexanediol diglycidyl ether, acrylic glycidyl ether, 2-ethylhexyl glycidyl ether, phenyl glycidyl ether, phenol glycidyl ether, p-t-butylphenyl glycidyl ether, adipic acid diglycidyl ester, o-phthalic acid diglycidyl ester, glycidyl methacrylate, and butyl glycidyl ether.

(Other additives)

The reactive adhesive used in the present invention may further contain, as needed, other additives different from those described above. Examples of the additives include leveling agents, inorganic fine particles such as colloidal silica and alumina sol, polymethyl methacrylate-based organic fine particles, defoaming agents, anti-sagging agents, wetting and dispersing agents, viscosity modifiers, ultraviolet absorbents, metal deactivation agents, peroxide decomposition agents, fire retardants, reinforcing agents, plasticizers, lubricants, rust preventive agents, fluorescent brighteners, inorganic heat-absorbing agents, flame retardants, antistatic agents, dehydrating agents, publicly known and commonly used thermoplastic elastomers, tackifiers, phosphate compounds, melamine resin, and reactive elastomers. The contents of such additives can be appropriately adjusted as long as they do not degrade functions of the reactive adhesive used in the present invention.

Such a bonding accelerator and an additive may be used by being mixed with any one component of the polyisocyanate composition (X) and the polyol composition (Y), or by being added as third components at the time of application. Ordinarily, the polyol composition (Y) is mixed with the components other than the polyisocyanate composition (X) to prepare a premix in advance, and the premix and the polyisocyanate composition (X) are mixed together immediately before use to achieve preparation.

(Method for producing flexible-packaging film)

A method for producing a flexible-packaging film according to the present invention is a method for producing a flexible-packaging film in which a first substrate and a second substrate are laminated with the above-described reactive adhesive therebetween, the method including a two-component separate application step in which a liquid mixture of a polyisocyanate composition (X) and a polyol composition (Y) applied to the first substrate and a catalyst (Z) formed in a dot pattern on the second substrate are brought into contact with each other to achieve contact-bonding together.

(Substrates)

The substrates used in the present invention are preferably substrates that can be wound up to rolls, have flexibility, and are used for flexible-packaging materials (also referred to as flexible packages. Incidentally, the flexible-packaging materials are also referred to as flexible-packaging films). Examples include paper, plastic films, metal vapor-deposition films, and metal foils such as a copper foil and an aluminum foil. The plastic films are biaxially oriented films formed of organic polymer resins and formed by melt extrusion, subsequent stretching in the machine direction and/or the cross direction, further thermal fixing, and cooling, or non-oriented films formed by melt extrusion, subsequent thermal fixing, and cooling without stretching; Examples of the organic polymer resins include olefin-based resins, acrylonitrile-butadiene-styrene copolymers (ABS resins), polyvinyl chloride-based resins, fluororesins, poly(meth)acrylic resins, carbonate-based resins, polyamide-based resins, polyimide-based resins, polyphenylene ether-based resins, and polyphenylene sulfide-based resins; and examples of the biaxially oriented films include synthetic resin films formed of polyester-based resins such as polyethylene terephthalate (PET), biaxially oriented polypropylene (OPP), polyvinylidene chloride coated OPP (KOP), nylon (NY), polyvinylidene chloride coated nylon, polyvinyl chloride, polyvinyl alcohol, and biaxially oriented polystyrene (OPS). The non-oriented films are formed of, for example, LDPE (low-density polyethylene), LLDPE (linear low-density polyethylene), MDPE (medium-density polyethylene), HDPE (high-density polyethylene), EVA (ethylene-vinyl acetate copolymer), or CPP (non-oriented polypropylene). In these organic polymer resins, small amounts of other organic monomers may be copolymerized, or other organic polymers may be blended.

Other examples include films having vapor-deposition films on the plastic films such as aluminum vapor-deposition PET, silica vapor-deposition PET, alumina vapor-deposition PET, and aluminum vapor-deposition CPP.

The transparency of such a substrate is not particularly limited; when it is required to be transparent, preferred is a substrate having a light transmittance of 50% or more. A plastic film on which an organic layer or an inorganic layer is to be formed may be subjected to, for example, a surface treatment such as a corona discharge treatment, a plasma discharge treatment, a flame treatment, or a surface roughening treatment, a publicly known anchor coating treatment, printing, or decoration.

The substrate preferably has a thickness in a range of 3 to 500 μm, more preferably in a range of 6 to 300 μm.

The liquid mixture of the polyisocyanate composition (X) and the polyol composition (Y) to be applied to the first substrate can be obtained by, for example, dissolution/dispersion, in a desired ratio, in an organic solvent having high dissolving power or a dispersing agent such as an ester-based solvent, a ketone-based solvent, an aromatic hydrocarbon, an aliphatic hydrocarbon, or an alicyclic hydrocarbon.

The liquid mixture is subjected to a publicly known application mode such as die coating, lip coating, gravure coating, direct reverse gravure coating, kiss reverse gravure coating, solventless coating, roll coating, reverse coating, knife coating, doctor coating, extrusion coating, slide coating, wire bar coating, or extrusion coating to thereby form, on the first substrate, a bonding layer formed of the liquid mixture of the polyisocyanate composition (X) and the polyol composition (Y).

The application amount of the polyurethane adhesive used in the present invention, that is, the liquid mixture of the polyisocyanate composition (X) and the polyol composition (Y), onto the first substrate is not particularly limited, but is preferably selected in a range of, for example, 0.1 to 10 $g/m^2$, in particular, 0.1 to 5.0 $g/m^2$ from the viewpoint that such a small amount provides, for example, high weatherability. When the application amount is less than 0.1 $g/m^2$, continuous uniform coating may not be achieved; on the other hand, when the application amount is more than 10.0 $g/m^2$, the solvent after the application evaporates at a lower rate, so that work efficiency may be seriously degraded or the problem of remaining solvent may occur.

(Separate application step)

On the other hand, on the second substrate, the catalyst (Z) is formed in a dot pattern. The application process in this step is not particularly limited as long as it forms the catalyst (Z) in a dot pattern on the second substrate, and may be, for example, an ink jet process, a gravure printing process, or a spraying process.

The ink jet process used herein corresponds to, for example, an ink jet head of a thermal mode, a bubble ejection mode, a solenoid valve mode, or a piezoelectric mode. The circulation channel portions within the ejection section may be of an end shooter type in which the common circulation channel (manifold) branches to the ejection nozzles or a side shooter type in which ink is circulated through the ejection nozzles. From the viewpoint of improving the ejectability of the catalyst to further increase the formation accuracy of fine droplets, preferably, the ink jet apparatus is an ink jet apparatus that employs a piezoelectric ink jet head, and, in the application step, the piezoelectric device functions to achieve application of the catalyst. The temperature of the head may be appropriately controlled in accordance with the viscosity of the catalyst.

In the present invention, an advantage of applying the catalyst (Z) by an ink jet process is to achieve control of the application amount in edge portions and formation of fine droplets, which are difficult to achieve by existing roll coaters. This addresses variations in the application amount at and near the edges due to squeeze-out in the machine direction and the cross direction, to address partial curing defects. In addition, unlike existing application modes using forms, application is achieved without bringing the form and the substrate into contact with each other, so that droplets of very small amounts are accurately applied without being affected by the irregularities of the form or the substrate. This leads to an increase in the production efficiency.

In the separate application step in the present invention, the catalyst (Z) is separately applied in a dot pattern, to thereby provide a method for producing a flexible-packaging film in which the squeeze-out phenomenon is suppressed, the pot life of the adhesive is increased for enabling an improvement in the production efficiency, and a fast curing speed is provided.

The liquid mixture of the polyisocyanate compound (X) and the polyol compound (Y) is applied to one of the substrates; subsequently, the catalyst (Z) is applied to the other substrate; contacting is performed, so that the liquid mixture of the agent A and the agent B and the catalyst come into contact with each other to react. The contacting method is preferably a method of performing dry lamination to achieve bonding together: the temperature of the laminate roll is preferably about room temperature to about 120°C, and the pressure is preferably about 3 to about 300 $kg/cm^2$. In this way, a flexible-packaging film can be obtained.

The flexible-packaging film obtained in the present invention is preferably subjected to aging after its production. Regarding the aging conditions, the temperature is preferably room temperature to 100°C, more preferably 25 to 80°C; the time is 12 to 240 hours, during which the curing reaction proceeds, to generate bonding strength.

The method for producing a flexible-packaging film according to the present invention enables production of a flexible-packaging film in which the laminate film has an improved appearance and the flexible packaging has a better texture. Thus, the resultant flexible-packaging film can be used as a packaging material for foods, and can be industrially used as various other packaging materials.

The process of applying the catalyst (Z) may be selected from among different processes; in a case of applying fine droplets, a gravure printing process or an ink jet process is preferably employed to separately apply the catalyst (Z) in a dot pattern. In particular, unlike the coating process using a form such as the gravure printing process, the ink jet process, which achieves printing without bringing the form and the substrate into contact with each other, achieves printing without being affected by irregularities of the form or the substrate, and hence is more preferable from the viewpoint of further suppressing squeeze-out.

EXAMPLES

Hereinafter, the present invention will be specifically described with reference to Examples.

Production example 1 [Synthesis of Polyisocyanate (A-1)]

To a flask equipped with a stirrer, a thermometer, and a nitrogen gas inlet, 17 parts of 4,4-diphenylmethane diisocyanate and 38 parts of an MDI mixture ["Lupranate MI" manufactured by BASF, mixture having a 4,4'-diphenylmethane diisocyanate/2,4'-diphenylmethane diisocyanate (mass ratio) of 1/1] were charged into the reaction vessel, stirred in nitrogen gas, and heated to 80°C. A polypropylene glycol (hereafter, abbreviated as "PPG") having a number-average molecular weight of 400 (11 parts), 22 parts of a PPG having a number-average molecular weight of 1000, and 12 parts of a PPG having a number-average molecular weight of 2000 were added dropwise in portions, and stirred for 5 to 6 hours to complete a urethane-forming reaction. The resultant polyisocyanate was found to have an NCO-group content of 13.8% and a melt viscosity at 40°C of 1500 mPa.s. Hereafter, this polyisocyanate will be abbreviated as "A-1".

Production example 2 [Synthesis of Polyisocyanate (A-2)]

To a flask equipped with a stirrer, a thermometer, and a nitrogen gas inlet, 14 parts by mass of 4,4-methylenebisdiphenyl isocyanate and 42 parts of an MDI mixture (the above-described "Lupranate MI" manufactured by BASF) were charged into the reaction vessel, stirred in nitrogen gas, and heated to 80°C. A polyester polyol resin (manufactured by DIC Corporation, "POLYLITE OD-X-2376", acid value: 0.8 mgKOH/g, molecular weight: about 1000, 44 parts) was added dropwise in portions, and stirred for about 5 to about 6 hours to complete a urethane-forming reaction. The resultant polyisocyanate was found to have an NCO-group content of 15.0%, and a melt viscosity at 40°C of 2000 mPa.s. Hereafter, this polyisocyanate will be abbreviated as "A-2".

Production example 3 [Synthesis of Polyisocyanate (A-3)]

To a flask equipped with a stirrer, a thermometer, and a nitrogen gas inlet, 35 parts of 4,4-diphenylmethane diisocyanate was charged into the reaction vessel, stirred in nitrogen gas, and heated to 80°C. A trifunctional PPG having a number-average molecular weight of 400 ("Excenol 430" manufactured by Asahi Glass Co., Ltd., 5 parts), 18 parts of a PPG having a number-average molecular weight of 1000, and 32 parts of a PPG having a number-average molecular weight of 2000 were added dropwise in portions, and stirred for 5 to 6 hours to complete a urethane-forming reaction. After the reaction, 5 parts of an isocyanurate of 1,6-hexamethylene diisocyanate (manufactured by Covestro AG, "Desmodul N3300"), and 5 parts of polymeric diphenylmethane diisocyanate (manufactured by BASF, "Lupranate M20S") were added and stirred for 30 minutes. The resultant polyisocyanate was found to have an NCO-group content of 10.0%, and a melt viscosity at 40°C of 1500 mPa.s. Hereafter, this polyisocyanate will be abbreviated as "A-3".

(Examples 1 to 23 and Comparative examples 1 to 4)

Adhesives were prepared in accordance with formulas in Table 1 to Table 5 and evaluated as described below. The results are described in Table 1 to Table 5.

(Methods for producing flexible-packaging films)

Flexible-packaging films were produced by Production mode 1 to Production mode 7. The formation of the catalyst (Z) in a dot pattern on the second substrates was performed by Application process 1 or Application process 2.

(Application process 1: ink jet process)

An ink jet printer (manufactured by SEIKO EPSON CORPORATION) was used to achieve printing with the catalyst (Z) on the second substrate at a resolution of 600 dpi and at a duty of 60%.

(Application process 2: gravure process)

A gravure printer was used to apply the catalyst (Z) to the second substrate at 300 LPI, at a cell depth of 10 $\mu$m, and at a dot percent of 60%.

(Production mode 1) Examples

In accordance with a formula described in Table 1 to Table 4, the polyisocyanate composition (X), the polyol composition (Y), and the catalyst (Z) were individually prepared; a liquid mixture of (X) and (Y) was applied, using a roll coater, to a film A, and (Z) was used for printing by Application process 1 described above on a film B; subsequently, the coated surfaces of the film A and the film B were contact-bonded together using a nip roll (nip roll temperature: 50°C), to produce a plastic film laminate. The application amounts of (X), (Y), and (Z) were individually set such that they corresponded to a mass ratio of (X), (Y), and (Z) described in Table 1 to Table 5, and were, in total, 2.0 g/m$^2$. The processing speed was 30 m/min.

(Production mode 2) Examples

In accordance with a formula described in Table 1 to Table 4, the polyisocyanate composition (X), the polyol composition (Y), and the catalyst (Z) were individually prepared; (X) was applied, using a roll coater, to a film A, and a liquid mixture of (Y) and (Z) was used for printing by Application process 1 described above on a film B; subsequently the coated surfaces of the film A and the film B were contact-bonded together, using a nip roll (nip roll temperature: 50°C), to produce a plastic film laminate. The application amounts of (X), (Y), and (Z) were individually set such that they corresponded to a mass ratio of (X), (Y), and (Z) described in Table 1 to Table 4, and were, in total, 2.0 g/m$^2$. The processing speed was 30 m/min.

(Production mode 3) Examples

In accordance with a formula described in Table 5, the polyisocyanate composition (X), the polyol composition (Y), and the catalyst (Z) were individually prepared; a liquid mixture of (X) and (Y) was applied, using a roll coater, to a film A, and (Z) was applied by Application process 2 described above to a film B; subsequently the coated surfaces of the film A and the film B were contact-bonded together using a nip roll (nip roll temperature: 50°C), to produce a plastic film laminate. The application amounts of (X), (Y), and (Z) were individually set such that they corresponded to a mass ratio of (X), (Y), and (Z) described in Table 1 to Table 4, and were, in total, 2.0 g/m$^2$. The processing speed was 30 m/min.

(Production mode 4) Comparative example

In accordance with a formula described in Table 5, the polyisocyanate composition (X) and the polyol composition (Y) were individually prepared; (X) was applied, using a roll coater, to a film A, and (Y) was used for printing by Application process 1 described above on a film B; subsequently, the coated surfaces of the film A and the film B were contact-bonded together using a nip roll (nip roll temperature: 50°C), to produce a plastic film laminate. The application amounts of (X) and (Y) were individually set such that they corresponded to a mass ratio of (X) and (Y) described in Table 5, and were, in total, 2.0 g/m$^2$. The processing speed was 30 m/min.

(Production mode 5) Comparative example

In accordance with a formula described in Table 5, the polyisocyanate composition (X) and the catalyst (Z) were individually prepared; (X) was applied, using a roll coater, to a film A, and (Z) was used for printing by Application process 1 described above on a film B; subsequently, the coated surfaces of the film A and the film B were contact-bonded together using a nip roll (nip roll temperature: 50°C), to produce a plastic film laminate. The application amounts of (X) and (Z) were individually set such that they corresponded to a mass ratio of (X) and (Z) described in Table 5, and were, in total, 2.0 g/m2. The processing speed was 30 m/min.

(Production mode 6) Comparative example

The polyisocyanate composition (X), the polyol composition (Y), and the catalyst (Z) were used in accordance with a formula described in Table 5 to prepare an adhesive; subsequently the liquid mixture of (X), (Y), and (Z) was applied, using a roll coater, to a film A; subsequently the coated surface of the film A and a film B were contact-bonded together using a nip roll (nip roll temperature: 50°C), to produce a plastic film laminate. The application amounts of (X), (Y), and (Z) were individually set such that they corresponded to a mass ratio of (X), (Y), and (Z) described in Table 5, and were, in total, 2.0 g/m2. The processing speed was 30 m/min.

(Production mode 7) Comparative example

In accordance with a formula described in Table 5, the polyisocyanate composition (X), the polyol composition (Y), and the catalyst (Z) were individually prepared; a liquid mixture of (X) and (Y), and (Z) were respectively applied to a film A and a film B, using a roll coater; subsequently, the coated surfaces of the film A and the film B were contact-bonded together using a nip roll (nip roll temperature: 50°C), to produce a plastic film laminate. The application amounts of (X), (Y), and (Z) were individually set such that they corresponded to a mass ratio of (X), (Y), and (Z) described in Table 5, and were, in total, 2.0 g/m$^2$. The processing speed was 30 m/min.

(Evaluation results)

The evaluation results of the state of squeeze-out, pot life, and curing speed during production of the laminate are described in Table 1 to Table 5.

(State of squeeze-out)

Regarding a film coated in accordance with a formula in Table 1 to Table 5, the state of squeeze-out of the catalyst (Z) was observed and visually evaluated in accordance with the following.

    4: no squeeze-out, hence good result
    3: slight squeeze-out
    2: visually recognized squeeze-out
    1: serious squeeze-out

(Pot life)

Immediately after preparation of an adhesive according to a formula of an application mode in Table 1 to Table 5, about 0.8 g thereof was placed on the measurement section of a rheometer, and measured for 30 minutes at such a temperature that the viscosity immediately after the preparation became about 1,000 mPa·s. Evaluation was performed using the viscosity values at the start and after the lapse of 30 minutes in accordance with the following.

    4: the viscosity after the lapse of 30 minutes is 1 or more and less than 2 times the viscosity of the liquid mixture at the start
    3: the viscosity after the lapse of 30 minutes is 2 or more and less than 3 times the viscosity of the liquid mixture at the start
    2: the viscosity after the lapse of 30 minutes is 3 or more and less than 4 times the viscosity of the liquid mixture at the start
    1: the viscosity after the lapse of 30 minutes is 4 or more times the viscosity of the liquid mixture at the start

(Curing speed)

A plastic film laminate after contact-bonding was aged in an atmosphere at 40°C for 24 hours, or in an atmosphere at 25°C for 3 hours, or in an atmosphere at 25°C for 24 hours, and subsequently subjected to infrared absorption spectroscopy in a transmission mode, to measure an absorption spectrum derived from isocyanate (at and near 2270 cm$^{-1}$).

    4: an isocyanate reaction ratio of 90% or more
    3: an isocyanate reaction ratio of 80% or more
    2: an isocyanate reaction ratio of 70% or more
    1: an isocyanate reaction ratio of 50% or more

[Table 1]

| ■ Formula | | | Example 1 | Example 2 | Example 3 | Example 4 | Example 5 | Example 6 |
|---|---|---|---|---|---|---|---|---|
| Polyisocyanate composition (X) | | | | | | | | |
| Polyisocyanate (A) | A-1 | | 53.0 | 53.0 | 53.0 | 60.0 | 60.0 | 60.0 |
| | A-2 | | - | - | - | - | - | - |
| | A-3 | | - | - | - | - | - | - |
| Polyol composition (Y) | | | | | | | | |
| Polyol (B) | B-1 | PPG-2000 | 40.0 | 35.0 | 25.0 | - | - | - |
| | B-2 | Castor oil | | | | 32.0 | 27.0 | 22.0 |
| | B-3 | EG/AA:2000 | - | - | - | - | - | - |
| Catalyst (Z) | | | | | | | | |
| Polyol (B) | B-1 | PPG-2000 | - | - | - | - | - | - |
| | B-2 | Castor oil | - | - | - | - | - | - |
| | | | | | | | | |
| Tertiary amine compound (C) having plurality of hydroxyl groups | C-1 | TE-360 | 7.0 | 7.0 | 7.0 | 2.5 | 2.5 | 2.5 |
| | C-2 | ED-500 | - | - | - | - | - | - |
| | | | | | | | | |
| Other catalyst (D) | D-1 | CPL | - | - | - | 0.5 | 0.5 | 0.5 |
| | D-2 | DBTDL | - | - | - | - | - | - |
| | D-3 | Bismuth octylate | - | - | - | - | - | - |
| | | | | | | | | |
| Plasticizer (E) | E-1 | Triacetin | - | 5.0 | 15.0 | 5.0 | 10.0 | 15.0 |
| | E-2 | Propylene carbonate | - | - | - | - | - | - |
| Total | | | 100.0 | 100.0 | 100.0 | 100.0 | 100.0 | 100.0 |
| Viscosity of agent Z | (mPa·s) | | 109.0 | 69.8 | 44.9 | 105.9 | 71.0 | 55.4 |
| Application amount ratio | Mass ratio of (Z) to (X + Y) defined as 100 | | 7.5 | 13.6 | 28.2 | 8.7 | 14.9 | 22.0 |
| ■ Production mode | | | 1 | 1 | 1 | 1 | 1 | 1 |
| | Application process | | 1 | 1 | 1 | 1 | 1 | 1 |
| | Film A | | Roll coater | Roll coater | Roll coater | Roll coater | Roll coater | Roll coater |
| | Film B | | Dot | Dot | Dot | Dot | Dot | Dot |
| ■ Evaluation results | | | | | | | | |
| State of squeeze-out | | | 4 | 4 | 4 | 4 | 4 | 4 |
| Pot life | | | 4 | 4 | 4 | 4 | 4 | 4 |
| Curing speed | | | 4 | 4 | 4 | 4 | 4 | 4 |

**EP 3 760 688 B1**

[Table 2]

| ■ Formula | | | Example 7 | Example 8 | Example 9 | Example 10 | Example 11 | Example 12 |
|---|---|---|---|---|---|---|---|---|
| Polyisocyanate composition (X) | | | | | | | | |
| Polyisocyanate (A) | A-1 | | 53.0 | 60.0 | - | - | 43.0 | 55.0 |
| | A-2 | | - | - | 58.0 | - | - | - |
| | A-3 | | - | - | - | 60.0 | - | - |
| Polyol composition (Y) | | | | | | | | |
| Polyol (B) | B-1 | PPG-2000 | - | - | - | - | - | - |
| | B-2 | Castor oil | - | - | 24.0 | 22.0 | - | 22.0 |
| | B-3 | EG/AA:2000 | - | - | - | - | 39.0 | - |
| Catalyst (Z) | | | | | | | | |
| Polyol (B) | B-1 | PPG-2000 | 25.0 | - | - | - | - | - |
| | B-2 | Castor oil | - | 22.0 | - | - | - | - |
| | | | | | | | | |
| Tertiary amine compound (C) having plurality of hydroxyl groups | C-1 | TE-360 | 7.0 | 2.5 | 2.5 | 2.5 | 2.5 | - |
| | C-2 | ED-500 | - | - | - | - | - | 2.5 |
| | | | | | | | | |
| Other catalyst (D) | D-1 | CPL | - | 0.5 | 0.5 | 0.5 | 0.5 | 0.5 |
| | D-2 | DBTDL | - | - | - | - | - | - |
| | D-3 | Bismuth octylate | - | - | - | - | - | - |
| | | | | | | | | |
| Plasticizer (E) | E-1 | Triacetin | 15.0 | 15.0 | 15.0 | 15.0 | 15.0 | 20.0 |
| | E-2 | Propylene carbonate | - | - | - | - | - | - |
| Total | | | 100.0 | 100.0 | 100.0 | 100.0 | 100.0 | 100.0 |
| Viscosity of agent Z | (mPa·s) | | 100.8 | 162.4 | 55.4 | 55.4 | 55.4 | 157.1 |
| Application amount ratio | Mass ratio of (Z) to (X + Y) defined as 100 | | 88.7 | 66.7 | 22.0 | 22.0 | 22.0 | 29.9 |
| ■ Production mode | | | 2 | 2 | 1 | 1 | 1 | 1 |
| | Application process | | 1 | 1 | 1 | 1 | 1 | 1 |
| | Film A | | Roll coater | Roll coater | Roll coater | Roll coater | Roll coater | Roll coater |
| | Film B | | Dot | Dot | Dot | Dot | Dot | Dot |
| ■ Evaluation results | | | | | | | | |
| State of squeeze-out | | | 3 | 3 | 4 | 4 | 4 | 4 |
| Pot life | | | 4 | 4 | 4 | 4 | 4 | 4 |
| Curing speed | | | 3 | 3 | 3 | 4 | 4 | 4 |

15

EP 3 760 688 B1

[Table 3]

| ■ Formula | | | Example 13 | Example 14 | Example 15 | Example 16 | Example 17 |
|---|---|---|---|---|---|---|---|
| Polyisocyanate composition (X) | | | | | | | |
| Polyisocyanate (A) | A-1 | | 60.0 | 60.0 | 60.0 | 60.0 | 45.0 |
| | A-2 | | - | - | - | - | - |
| | A-3 | | - | - | - | - | - |
| Polyol composition (Y) | | | | | | | |
| Polyol (B) | B-1 | PPG-2000 | - | - | - | - | - |
| | B-2 | Castor oil | 22.0 | 22.0 | 22.0 | 22.0 | 22.0 |
| | B-3 | EG/AA:2000 | - | - | - | - | - |
| Catalyst (Z) | | | | | | | |
| Polyol (B) | B-1 | PPG-2000 | - | - | - | 15.0 | - |
| | B-2 | Castor oil | - | - | - | - | 15.0 |
| | | | | | | | |
| Tertiary amine compound (C) having plurality of hydroxyl groups | C-1 | TE-360 | 2.5 | 2.5 | 2.5 | 2.5 | 2.5 |
| | C-2 | ED-500 | - | - | - | - | - |
| | | | | | | | |
| Other catalyst (D) | D-1 | CPL | - | - | 0.5 | 0.5 | 0.5 |
| | D-2 | DBTDL | 0.5 | - | - | - | - |
| | D-3 | Bismuth octylate | - | 0.5 | - | - | - |
| | | | | | | | |
| Plasticizer (E) | E-1 | Triacetin | 15.0 | 15.0 | - | - | 15.0 |
| | E-2 | Propylene carbonate | - | - | 15.0 | - | - |
| Total | | | 100.0 | 100.0 | 100.0 | 100.0 | 100.0 |
| Viscosity of agent Z | (mPa·s) | | 28.2 | 28.2 | 47.1 | 167.9 | 143.9 |
| Application amount ratio | Mass ratio of (Z) to (X + Y) defined as 100 | | 22.0 | 22.0 | 22.0 | 22.0 | 49.3 |
| ■ Production mode | | | 1 | 1 | 1 | 1 | 1 |
| | Application process | | 1 | 1 | 1 | 1 | 1 |
| | Film A | | Roll coater | Roll coater | Roll coater | Roll coater | Roll coater |
| | Film B | | Dot | Dot | Dot | Dot | Dot |
| ■ Evaluation results | | | | | | | |
| State of squeeze-out | | | 4 | 4 | 4 | 4 | 4 |
| Pot life | | | 4 | 4 | 4 | 4 | 4 |
| Curing speed | | | 4 | 4 | 4 | 4 | 4 |

[Table 4]

| ■ Formula | | | Example 18 | Example 19 | Example 20 | Example 21 | Example 22 | Example 23 |
|---|---|---|---|---|---|---|---|---|
| Polyisocyanate composition (X) | | | | | | | | |
| Polyisocyanate (A) | A-1 | | 53.0 | 53.0 | 53.0 | 60.0 | 60.0 | 60.0 |
| | A-2 | | - | - | - | - | - | - |
| | A-3 | | - | - | - | - | - | - |
| Polyol composition (Y) | | | | | | | | |
| Polyol (B) | B-1 | PPG-2000 | 40.0 | 35.0 | 25.0 | - | - | - |
| | B-2 | Castor oil | | | | 32.0 | 27.0 | 22.0 |
| | B-3 | EG/AA:2000 | - | - | - | - | - | - |
| Catalyst (Z) | | | | | | | | |
| Polyol (B) | B-1 | PPG-2000 | - | - | - | - | - | - |
| | B-2 | Castor oil | - | - | - | - | - | - |
| | | | | | | | | |
| Tertiary amine compound (C) having plurality of hydroxyl groups | C-1 | TE-360 | 7.0 | 7.0 | 7.0 | 2.5 | 2.5 | 2.5 |
| | C-2 | ED-500 | - | - | - | - | - | - |
| | | | | | | | | |
| Other catalyst (D) | D-1 | CPL | - | - | - | 0.5 | 0.5 | 0.5 |
| | D-2 | DBTDL | - | - | - | - | - | - |
| | D-3 | Bismuth octylate | - | - | - | - | - | - |
| | | | | | | | | |
| Plasticizer (E) | E-1 | Triacetin | - | 5.0 | 15.0 | 5.0 | 10.0 | 15.0 |
| | E-2 | Propylene carbonate | - | - | - | - | - | - |
| Total | | | 100.0 | 100.0 | 100.0 | 100.0 | 100.0 | 100.0 |
| Viscosity of agent Z | (mPa·s) | | 109.0 | 69.8 | 44.9 | 105.9 | 71.0 | 55.4 |
| Application amount ratio | Mass ratio of (Z) to (X + Y) defined as 100 | | 7.5 | 13.6 | 28.2 | 8.7 | 14.9 | 22.0 |
| ■ Production mode | | | 3 | 3 | 3 | 3 | 3 | 3 |
| | Application process | | 2 | 2 | 2 | 2 | 2 | 2 |
| | Film A | | Roll coater | Roll coater | Roll coater | Roll coater | Roll coater | Roll coater |
| | Film B | | Gravure | Gravure | Gravure | Gravure | Gravure | Gravure |
| ■ Evaluation results | | | | | | | | |
| State of squeeze-out | | | 3 | 3 | 3 | 3 | 3 | 3 |
| Pot life | | | 4 | 4 | 4 | 4 | 4 | 4 |
| Curing speed | | | 4 | 4 | 4 | 4 | 4 | 4 |

17

[Table 5]

| ■ Formula | | | Comparative example 1 | Comparative example 2 | Comparative example 3 | Comparative example 4 |
|---|---|---|---|---|---|---|
| Polyisocyanate composition (X) | | | | | | |
| Polyisocyanate (A) | A-1 | | 65.0 | 65.0 | 60.0 | 60.0 |
| | A-2 | | - | - | - | - |
| | A-3 | | - | - | - | - |
| Polyol composition (Y) | | | | | | |
| Polyol (B) | B-1 | PPG-2000 | - | - | - | - |
| | B-2 | Castor oil | 35.0 | - | 22.0 | 22.0 |
| | B-3 | EG/AA:2000 | - | - | - | - |
| Catalyst (Z) | | | | | | |
| Tertiary amine compound (C) having plurality of hydroxyl groups | C-1 | TE-360 | -- | | 2.5 | - |
| Other catalyst (D) | D-1 | CPL | - | - | 0.5 | - |
| Plasticizer (E) | E-1 | Triacetin | - | - | 15.0 | - |
| Catalyst (Z) | | | | | | |
| Polyol (B) | B-1 | PPG-2000 | - | - | - | - |
| | B-2 | Castor oil | - | 35.0 | - | - |
| | | | | | | |
| Tertiary amine compound (C) having plurality of hydroxyl groups | C-1 | TE-360 | - | - | - | 2.5 |
| | C-2 | ED-500 | - | - | - | - |
| | | | | | | |
| Other catalyst (D) | D-1 | CPL | - | - | - | 0.5 |
| | D-2 | DBTDL | - | - | - | - |
| | D-3 | Bismuth octylate | - | - | - | - |
| | | | | | | |
| Plasticizer (E) | E-1 | Triacetin | - | - | - | 15.0 |
| | E-2 | Propylene carbonate | - | - | - | - |
| Total | | | 100.0 | 100.0 | 100.0 | 100.0 |
| Viscosity of agent Z | (mPa·s) | | - | 250.0 | - | 55.4 |
| Application amount ratio | Mass ratio of (Z) to (X + Y) defined as 100 | | 0.0 | 53.8 | 22.0 | 22.0 |
| ■ Production mode | | | 4 | 5 | 6 | 7 |
| | Application process | | 1 | 1 | 1 | - |
| | Film A | | Roll coater | Roll coater | Roll coater | Roll coater |
| | Film B | | - | Dot | Dot | Roll coater |

(continued)

| ■ Formula | | Comparative example 1 | Comparative example 2 | Comparative example 3 | Comparative example 4 |
|---|---|---|---|---|---|
| ■ Evaluation results | | | | | |
| State of squeeze-out | | - | 3 | - | 1 |
| Pot life | | 4 | 4 | 1 | 4 |
| Curing speed | | 1 | 1 | 4 | 4 |

The abbreviations in Table 1 to Table 5 mean the following.

PPG-2000: polypropylene glycol (manufactured by Mitsui Chemicals Polyurethanes, Inc., number-average molecular weight: about 2,000, hydroxyl value: 55.2 mgKOH/g, melt viscosity at 40°C: 150 mPa·s)
Castor oil: purified castor oil (manufactured by ITOH OIL CHEMICALS CO., LTD., hydroxyl value: 160.5 mgKOH/g, melt viscosity at 40°C: 250 mPa·s)
TE-360: tri(1,2-polypropylene glycol)amine
ED-500: polypropylene glycol ethylenediamine ether
CPL: caprolactam
DBTDL: dibutyl tin dilaurate

The above-described results have demonstrated the following: in each of Examples 1 to 23, the catalyst (Z) was separately applied in a dot pattern to the other substrate, to thereby provide good results in terms of the squeeze-out phenomenon, pot life, and curability. Therefore, a production method including a separate application step according to the present invention suppresses the squeeze-out phenomenon and provides high curability while ensuring pot life.

By contrast, in Comparative examples 1 and 2, which had formulas not containing catalysts, the curing speed was low.

In Comparative example 3, which employed a method of applying a liquid mixture of the polyisocyanate composition (X), the polyol composition (Y), and the catalyst (Z), a high curing speed was achieved, but pot life was not ensured.

Furthermore, in Comparative example 4, which is an example in which the catalyst was applied using a roll coater, the catalyst had a low viscosity, so that the squeeze-out phenomenon occurred.

**Claims**

1.    A method for producing a flexible-packaging film in which a first substrate and a second substrate are laminated with a reactive adhesive of a polyisocyanate composition (X) and a polyol composition (Y) therebetween, the method comprising:

      a two-component separate application step in which a liquid mixture applied to the first substrate and including the polyisocyanate composition (X) and the polyol composition (Y), and
      a catalyst (Z) that accelerates the urethane forming reaction and is formed in a dot pattern on the second substrate are brought into contact with each other to achieve contact-bonding together.

2.    The method for producing a flexible-packaging film according to Claim 1, wherein the substrates are plastic films, metal vapor-deposition films, or metal foils.

3.    The method for producing a flexible-packaging film according to Claim 1 or 2, wherein, as the second substrate, a non-oriented film is employed.

4.    The method for producing a flexible-packaging film according to any one of Claims 1 to 3, wherein the first substrate and the second substrate are contact-bonded together using a nip roll.

5.    The method for producing a flexible-packaging film according to any one of Claims 1 to 4, wherein a ratio of a mass of the catalyst (Z) to a mass of the liquid mixture defined as 100, the liquid mixture being applied to the first substrate and including the polyisocyanate composition (X) and the polyol composition (Y), is in a range of 0.5 to 67.

6. The method for producing a flexible-packaging film according to any one of Claims 1 to 5, wherein the polyol composition (Y) contains at least one polyol selected from the group consisting of polyester polyol, polyester urethane polyol, polyether urethane polyol, polyether polyol, and castor oil-based polyol.

7. The method for producing a flexible-packaging film according to any one of Claims 1 to 6, wherein the polyol composition (Y) contains at least one polyol selected from the group consisting of polyester polyol, polyester urethane polyol, polyether urethane polyol, polyether polyol, and castor oil-based polyol, and a tertiary amine compound (B) having a plurality of hydroxyl groups.

8. The method for producing a flexible-packaging film according to any one of Claims 1 to 7, wherein the reactive adhesive has an amine value in a range of 0.5 to 40 mgKOH/g.

9. The method for producing a flexible-packaging film according to any one of Claims 1 to 8, wherein a ratio of a mass of the polyol composition (Y) to a mass of the polyisocyanate composition (X) defined as 100 is in a range of 10 to 150.

10. The method for producing a flexible-packaging film according to any one of Claims 1 to 9, wherein the catalyst (Z) includes at least one catalyst selected from metal-based catalysts, amine-based catalysts, diazabicycloundecene-based catalysts, aliphatic cyclic amide compounds, and titanium chelate complexes.

**Patentansprüche**

1. Verfahren zur Herstellung einer Folie für flexible Verpackungen, bei dem ein erstes Substrat und ein zweites Substrat mit einem reaktiven Klebstoff aus einer Polyisocyanat-Zusammensetzung (X) und einer Polyol-Zusammensetzung (Y) dazwischen laminiert werden, wobei das Verfahren umfasst:

einen separaten Zweikomponenten-Auftragsschritt, bei dem ein auf das erste Substrat aufgetragenes flüssiges Gemisch, das die Polyisocyanat-Zusammensetzung (X) und die Polyol-Zusammensetzung (Y) enthält, und ein Katalysator (Z), der die Urethanbildungsreaktion beschleunigt und in einem Punktmuster auf dem zweiten Substrat gebildet ist, miteinander in Kontakt gebracht werden, um eine gemeinsame Kontaktbindung zu erreichen.

2. Verfahren zur Herstellung einer Folie für flexible Verpackungen nach Anspruch 1, wobei die Substrate Kunststofffolien, Metallbedampfungsfolien oder Metallfolien sind.

3. Verfahren zur Herstellung einer Folie für flexible Verpackungen nach Anspruch 1 oder 2, wobei als zweites Substrat eine nicht orientierte Folie verwendet wird.

4. Verfahren zur Herstellung einer Folie für flexible Verpackungen nach einem der Ansprüche 1 bis 3, wobei das erste Substrat und das zweite Substrat unter Verwendung einer Quetschwalze miteinander kontaktverbunden werden.

5. Verfahren zur Herstellung einer Folie für flexible Verpackungen nach einem der Ansprüche 1 bis 4, wobei das Verhältnis der Masse des Katalysators (Z) zur Masse der als 100 definierten flüssigen Mischung, die auf das erste Substrat aufgebracht wird und die Polyisocyanat-Zusammensetzung (X) und die Polyol-Zusammensetzung (Y) enthält, im Bereich von 0,5 bis 67 liegt.

6. Verfahren zur Herstellung einer Folie für flexible Verpackungen nach einem der Ansprüche 1 bis 5, wobei die Polyol-Zusammensetzung (Y) mindestens ein Polyol enthält, das ausgewählt ist aus der Gruppe bestehend aus Polyesterpolyol, Polyesterurethanpolyol, Polyetherurethanpolyol, Polyetherpolyol und Polyol auf Rizinusölbasis.

7. Verfahren zur Herstellung einer Folie für flexible Verpackungen nach einem der Ansprüche 1 bis 6, wobei die Polyol-Zusammensetzung (Y) mindestens ein Polyol enthält, das ausgewählt ist aus der Gruppe bestehend aus Polyesterpolyol, Polyesterurethanpolyol, Polyetherurethanpolyol, Polyetherpolyol und Polyol auf Rizinusölbasis, und eine tertiäre Aminverbindung (B) mit einer Mehrzahl von Hydroxylgruppen.

8. Verfahren zur Herstellung einer Folie für flexible Verpackungen nach einem der Ansprüche 1 bis 7, wobei der reaktive Klebstoff eine Aminzahl im Bereich von 0,5 bis 40 mgKOH/g aufweist.

9. Verfahren zur Herstellung einer Folie für flexible Verpackungen nach einem der Ansprüche 1 bis 8, wobei das Verhältnis der Masse der Polyol-Zusammensetzung (Y) zur Masse der Polyisocyanat-Zusammensetzung (X), definiert als 100, im Bereich von 10 bis 150 liegt.

10. Verfahren zur Herstellung einer Folie für flexible Verpackungen nach einem der Ansprüche 1 bis 9, wobei der Katalysator (Z) mindestens einen Katalysator umfasst, der aus Katalysatoren auf Metallbasis, Katalysatoren auf Aminbasis, Katalysatoren auf Diazabicycloundecenbasis, aliphatischen cyclischen Amidverbindungen und Titanchelatkomplexen ausgewählt ist.

**Revendications**

1. Méthode de production d'un film d'emballage souple dans laquelle un premier substrat et un second substrat sont laminés avec un adhésif réactif d'une composition de polyisocyanate (X) et d'une composition de polyol (Y) entre les deux, la méthode comprenant :

   une étape d'application séparée à deux composants au cours de laquelle un mélange liquide est appliqué sur le premier substrat et comprend la composition de polyisocyanate (X) et la composition de polyol (Y), et un catalyseur (Z) qui accélère la réaction de formation de l'uréthane et qui est formé sous forme de points sur le second substrat, sont mis en contact l'un avec l'autre pour obtenir une liaison par contact.

2. Méthode de production d'un film d'emballage souple selon la revendication 1, dans laquelle les substrats sont des films plastiques, des films métalliques déposés en phase vapeur ou des feuilles métalliques.

3. Méthode de production d'un film d'emballage souple selon la revendication 1 ou 2, dans laquelle le second substrat est un film non orienté.

4. Méthode de production d'un film d'emballage souple selon l'une des revendications 1 à 3, dans laquelle le premier substrat et le second substrat sont liés par contact à l'aide d'un rouleau pinceur.

5. Méthode de production d'un film d'emballage souple selon l'une des revendications 1 à 4, dans laquelle le rapport d'une masse du catalyseur (Z) à une masse du mélange liquide, défini comme 100, le mélange liquide étant appliqué sur le premier substrat et comprenant la composition de polyisocyanate (X) et la composition de polyol (Y), est compris entre 0,5 et 67.

6. Méthode de production d'un film d'emballage souple selon l'une des revendications 1 à 5, dans laquelle la composition de polyol (Y) contient au moins un polyol choisi dans le groupe constitué par les polyols de polyester, les polyols de polyester-uréthane, les polyols de polyéther-uréthane, les polyols de polyéther et les polyols à base d'huile de ricin.

7. Méthode de production d'un film d'emballage souple selon l'une des revendications 1 à 6, dans laquelle la composition de polyol (Y) contient au moins un polyol choisi dans le groupe constitué par les polyols de polyester, les polyols de polyester-uréthane, les polyols de polyéther-uréthane, les polyols de polyéther et les polyols à base d'huile de ricin, et un composé d'amine tertiaire (B) ayant plusieurs groupes hydroxyle.

8. Méthode de production d'un film d'emballage souple selon l'une des revendications 1 à 7, dans laquelle l'adhésif réactif a un indice d'amine compris entre 0,5 et 40 mgKOH/g.

9. Méthode de production d'un film d'emballage souple selon l'une des revendications 1 à 8, dans laquelle le rapport de la masse de la composition de polyol (Y) à la masse de la composition de polyisocyanate (X), définie comme 100, est compris entre 10 et 150.

10. Méthode de production d'un film d'emballage souple selon l'une des revendications 1 à 9, dans laquelle le catalyseur (Z) comprend au moins un catalyseur choisi parmi les catalyseurs à base de métaux, les catalyseurs à base d'amines, les catalyseurs à base de diazabicycloundécène, les composés amides cycliques aliphatiques et les complexes de chélate de titane.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004155113 A
- JP 2014189639 A
- JP 2003171641 A
- JP 2003171642 A
- JP 2003171643 A